# EUROPÄISCHE PATENTSCHRIFT

(11) **EP 3 944 789 B1**
(45) Veröffentlichungstag und Bekanntmachung des Hinweises auf die Patenterteilung: **10.04.2024**
(21) Anmeldenummer: 21184048.3
(22) Anmeldetag: 06.07.2021
(51) Int. Cl.: A47B 88/919, H02G 11/00, H05K 7/14, A47B 97/00

(54) **MÖBELSTÜCK MIT KABELFÜHRUNG**
PIECE OF FURNITURE WITH CABLE GUIDE
MEUBLE POURVU DU PASSE-CÂBLE

(30) Priorität: 29.07.2020 DE 102020120050
(43) Veröffentlichungstag der Anmeldung: 02.02.2022
(73) Patentinhaber: BBP Kunststoffwerk Marbach Baier GmbH, 71672 Marbach (DE)
(72) Erfinder: Baier, Marc G., 71672 Marbach am Neckar (DE)
(74) Vertreter: Witte, Weller & Partner Patentanwälte mbB

(56) Entgegenhaltungen:
- FR-A- 789 378
- FR-A- 1 424 449
- JP-A- 2009 172 043
- JP-U- S57 157 180

## Beschreibung

Die vorliegende Offenbarung bezieht sich auf ein Möbelstück mit einer Schublade und einer Kabelführung. Im Sinne der vorliegenden Offenbarung handelt es sich bei einer Kabelführung um eine Führung für ein Gerätekabel, etwa für Mobiltelefone, Tablets, Laptops und Ähnliches. Ein Gerätekabel wird beispielsweise als Anschlusskabel, Netzkabel, Ladekabel o. ä. bezeichnet. Einerseits kann ein solches Kabel zum Informationsaustausch (Datenübertragung) genutzt werden. Ferner kann ein solches Kabel ebenso zur Energieübertragung (Netzkabel, Ladekabel und dergleichen) genutzt werden. Sogenannte USB-Kabel (Universal Serial Bus) für Geräte mit USB-Anschluss und vergleichbare Kabel nach anderen Standards dienen häufig zum Anschluss von Mobiltelefonen, Kameras, Tablets und dergleichen.

Aus der FR 789 378 A ist ein Kabelroller für Netzkabel, Telefonkabel und dergleichen bekannt. Der Kabelroller ist nicht Bestandteil eines Möbelstücks. Aus der JP S57 157180 U ist ein fahrbarer Geräteträger bekannt, der dazu dient, einzelne Geräte einer Reihe von Geräten zu Wartungs- und Reparaturzwecken auf der Reihe herauszufahren. Der Geräteträger weist einen Speichermechanismus für Kabel und Leitungen auf, damit beim Ausfahren des Gerätes genügend Länge zur Verfügung steht. JP 2009 172 043 A offenbart ein Möbelstück mit einer Schublade und einer bekannten Kabelführung.

Moderne Mobiltelefone und Tablets müssen regelmäßig geladen werden, je nach Nutzungsumfang täglich. Das permanente Vorhalten von Kabeln wird jedoch von vielen Nutzern als unordentlich empfunden. Dies gilt insbesondere im Arbeitsumfeld, etwa auf dem Schreibtisch.

Daher besteht bei einigen Nutzern der Wunsch, Gerätekabel und ähnliche Kabel versteckt anzuordnen und vorzuhalten, um bedarfsweise Geräte ankoppeln zu können. Da Mobilgeräte häufig hochpreisige Produkte sind, besteht ein gewisser Bedarf, diese nicht frei rumliegen zu lassen und die Geräte gegebenenfalls sogar in Schränken, Schubladen und dergleichen einzuschließen. Es wäre von Vorteil, wenn die Geräte gleichzeitig über Ladekabel aufgeladen oder anderweitig über Kabel an weitere Gerätschaften angeschlossen werden können.

Prinzipiell ist es vorstellbar, Ausnehmungen in der Rückwand einer Schublade vorzusehen, und dort ein Kabel durchzuführen, so dass sich eine Verbindung aus dem Inneren der Schublade durch deren Rückwand hin zu einem Netzstecker, Computer, Bildschirm oder ähnlichem realisieren lässt. Dann kann ein Mobilgerät innerhalb der Schublade an das Kabel angeschlossen und folglich aufgeladen oder zum Datenaustausch mit einem weiteren Gerät verbunden werden.

Es hat sich jedoch gezeigt, dass sich insbesondere bei Schubladen durch das Ausziehen und Einschieben Schlaufen, Knickstellen o. ä. ergeben können, die das Kabel quetschen, schneiden oder anderweitig beschädigen können. Dies beeinträchtigt die Funktion. Schlimmstenfalls ergeben sich sogar Folgeschäden bei den angeschlossenen Geräten. Unter Umständen kann das Kabel unbeabsichtigt nach hinten aus der Schublade herausgezogen werden, so dass ein erneutes Einfädeln nötig wird.

Vor diesem Hintergrund liegt der vorliegenden Offenbarung die Aufgabe zugrunde, ein Möbelstück mit einer Kabelführung anzugeben, die eine hohe Funktionssicherheit bietet, auch bei mehrmaligem Öffnen und Schließen der Schublade. Beschädigung des Kabels und Quetschungen sollen vermieden werden. Insgesamt soll eine funktionale und versteckte Anschlussmöglichkeit für Mobilgeräte und ähnliche Geräte im Inneren einer Schublade geschaffen werden. Dies soll zu einer aufgeräumten Optik des Möbelstücks, etwa des Schreibtisches beitragen und den sogenannten Kabelsalat (Kabelgewirr) reduzieren, der sich beispielsweise bei Arbeitsplätzen mit verschiedenen elektronischen Geräten häufig ergibt.

Gemäß einem ersten Aspekt der vorliegenden Offenbarung wird ein Möbelstück mit einem Gestell und zumindest einer Schublade bereitgestellt, wobei die Schublade eine Rückwand aufweist, und wobei die Rückwand mit einer Aussparung versehen ist, um ein Kabel, insbesondere ein Lade- und/oder Anschlusskabel durchzuführen, wobei das Möbelstück eine Kabelführung aufweist, die am Gestell angeordnet und der Aussparung zugeordnet ist. Die Kabelführung ist mit einem als Führungsrolle gestalteten ersten Führungselement mit einer Führungsfläche für ein zu führendes Kabel, das mit einem zweiten Führungselement zusammenwirkt, wobei das erste Führungselement und das zweite Führungselement gegeneinander vorgespannt sind, um dazwischen das Kabel unter Vorspannung zu führen, und mit einem Energiespeicher versehen, der ein Rückstellmoment erzeugt, wenn die Führungsrolle durch das zu führende Kabel bei einer Auszugbewegung in einer ersten Drehrichtung rotiert wird, wobei das Rückstellmoment gegensinnig zur ersten Drehrichtung orientiert ist, um eine Rotation der Führungsrolle in einer zweiten Drehrichtung zu unterstützen, wenn das zu führende Kabel bei einer Einschubbewegung relativ zur Führungsrolle bewegt wird.

Auf diese Weise wird die Aufgabe der Erfindung vollkommen gelöst.

Die Kabelführung macht sich zunutze, dass bei der Auszugbewegung (etwa beim Öffnen einer Schublade) eine Drehmitnahme der Führungsrolle durch das Kabel möglich ist, wodurch Energie gespeichert werden kann, um bei der Einschubbewegung (etwa beim Schließen der Schublade) ein Rückstellmoment bereitzustellen, das dazu beiträgt, dass das Kabel hinreichend straff und geradlinig geführt wird. Auf diese Weise können Schlaufen, Knickstellen und Ähnliches wirksam vermieden werden. Insgesamt lässt sich eine funktionale, versteckte Kabelführung bewerkstelligen.

Es versteht sich, dass die Drehmitnahme der Führungsrolle durch das Kabel reibungsabhängig ist. Mit anderen Worten wird zumindest in beispielhaften Ausgestaltungen eine Vorspannkraft erzeugt, die das Kabel leicht gegen die Führungsrolle drückt. Auf diese Weise kann das Kabel bei der Auszugbewegung die Führungsrolle antreiben und rotieren. Es versteht sich, dass diese Bewegung (Antrieb der Führungsrolle durch das Kabel und umgekehrt) schlupfbehaftet sein kann.

Die Kabelführung mit dem ersten Führungselement und dem zweiten Führungselement ist in beispielhaften Ausgestaltungen nachgiebig gestaltet, so dass das zu führende Kabel einfach eingeschoben oder eingedrückt werden kann. Wenn beide Elemente gegeneinander vorgespannt sind, ist das Kabel hinreichend sicher dazwischen aufgenommen und geführt.

Die Kabelführung eignet sich für Schubladen, Auszüge und ähnliche bewegliche Teile, die relativ zu einer Rückwand oder einem anderen gestellfesten Teil des Möbelstücks verfahren werden. Die Kabelführung eignet sich auch für modulare Möbel, etwa für ausziehbare Tische, höhenverstellbare Tische und Ähnliches, bei denen ein verfahrbares Element mit einer Möglichkeit zur Bereitstellung eines Kabelanschlusses versehen ist. Schubladen und dergleichen finden sich beispielsweise bei Schreibtischen, Regalen, Schränken, Rollwagen und ähnlichem.

Gemäß einer beispielhaften Ausführungsform ist das zweite Führungselement als zweite Führungsrolle gestaltet und mit einer Führungsfläche für das zu führende Kabel versehen, wobei die Führungsrollen mit ihren Umfangsseiten einander zugewandt sind, um das Kabel dazwischen zu führen. In einer beispielhaften Ausführungsform sind daher zwei Führungsrollen mit im Wesentlichen parallelen Achsen vorgesehen. Die Führungsrollen sind beispielhaft radial gegeneinander vorgespannt. Die Vorspannung kann bei einer oder beiden der Führungsrollen erzeugt werden und jeweils in Richtung auf die andere Führungsrolle wirken.

Die Führungsfläche ist beispielsweise als umlaufende Nut am Umfang der ersten Führungsrolle und/oder der zweiten Führungsrolle gestaltet. Auf diese Weise ergibt sich ein Führungsspalt für das zu führende Kabel. Die zumindest eine Führungsrolle umfasst beispielsweise eine Lauffläche aus einem Material mit hoher Haftreibung, beispielsweise Gummi, Kunststoffe, thermoplastische Elastomere und dergleichen.

Erfindungsgemaß ist das erste Führungselement drehbar am Möbelstück gelagert, wobei vorzugsweise auch das zweite Führungselement drehbar am Möbelstück gelagert ist. Auf diese Weise kann das zu führende Kabel selbst bei der Auszugbewegung eine Drehbewegung des ersten Führungselements und/oder des zweiten Führungselements veranlassen. Die Drehbewegung kann dazu genutzt werden, den zumindest einen Energiespeicher aufzuladen, wenn das Kabel ausgezogen wird.

Erfindungsgemäß umfasst das Möbelstück zumindest eine Schublade, die bei der Auszugbewegung und Einschubbewegung relativ zum ersten Führungselement bewegt wird, insbesondere durch eine translatorische Bewegung. Auf diese Weise kann in der Schublade eine versteckte Möglichkeit zum Anschluss von Mobilgeräten und dergleichen geschaffen werden. Das Kabel kann beim Ausziehen und Einschieben der Schublade zumindest teilweise mit bewegt werden. Die Kabelführung minimiert die Gefahr eines Einklemmens oder anderer Beschädigungen des Kabels.

Gemäß einer weiteren beispielhaften Ausführungsform umfasst der Energiespeicher eine Speicherfeder, wobei der Energiespeicher bei der Auszugbewegung vorgespannt wird, wenn das Kabel eine Bewegungsmitnahme zumindest des ersten Führungselement veranlasst. Diese Weise ist der Energiespeicher als mechanischer Energiespeicher gestaltet. Wenn der Energiespeicher bei der Auszugbewegung aufgeladen wird, kann die gespeicherte Energie bei der Einschubbewegung abgegeben werden, um das Kabel hinreichend straff zu halten. Es versteht sich, dass der Energiespeicher grundsätzlich auch eine fluidische Feder und Ähnliches umfassen kann.

Gemäß einer weiteren beispielhaften Ausführungsform ist die Speicherfeder als Spiralfeder gestaltet. Auf diese Weise kann die Speicherfeder gut in eine Laufrolle integriert bzw. mit dieser gekoppelt werden. Der Bauraumbedarf der Kabelführung wird minimiert. Eine Spiralfeder ist beispielsweise als spiralförmig gewickelte Blattfeder gestaltet.

Gemäß einer weiteren beispielhaften Ausführungsform weist das erste Führungselement eine Achse auf, wobei der insbesondere als Speicherfeder gestaltete Energiespeicher konzentrisch zur Achse angeordnet ist. Auf diese Weise kann der Energiespeicher gut in die Führungsrolle integriert werden. Wenn der Energiespeicher eine Spiralfeder umfasst, so ist ein erstes Ende mit einem feststehenden Teil (etwa feste Achse oder seitlicher Rahmen/seitliche Konsole) und ein zweites Ende mit einem beweglichen Teil (etwa Drehscheibe) der Führungsrolle verbunden. Auf diese Weise kann der Energiespeicher bei der durch den Auszug des Kabels induzierten Drehbewegung der Führungsrolle aufgeladen werden.

Gemäß einer weiteren beispielhaften Ausführungsform sind sowohl das erste Führungselement als auch das zweite Führungselement mit einem Energiespeicher gekoppelt. Es versteht sich, dass der Energiespeicher auch als integraler Bestandteil des ersten Führungselements und/oder des zweiten Führungselements gestaltet sein kann. Bei der Gestaltung mit zwei einander benachbarten Führungsrollen ist einerseits die Variante mit lediglich einem Energiespeicher bei einer der beiden Führungsrollen und andererseits die Variante mit einem Energiespeicher bei jeder der beiden Führungsrollen denkbar.

Gemäß einer weiteren beispielhaften Ausführungsform ist zumindest das erste Führungselement oder das zweite Führungselement mit einem Vorspannelement, insbesondere einer Feder, gekoppelt, die das erste Führungselement und das zweite Führungselement mit ihren Führungsflächen gegeneinander vorspannt, um das Kabel unter Erzeugung von Reibung dazwischen zu führen. Eine hinreichend hohe Reibung zwischen der Ummantelung des Kabels und zumindest dem beweglichen Führungselement erhöht die Funktionssicherheit der Kabelführung. Die Vorspannung erhöht die Reibung und trägt dazu bei, dass zumindest das bewegliche Führungselemente (zum Beispiel erste Führungsrolle) bei der Auszugbewegung des Kabels mitgenommen/angetrieben werden, um den zugeordneten Energiespeicher aufzuladen. Mit anderen Worten sind Ausgestaltungen denkbar, bei denen das Kabel nicht nur durch die Führungskontur der beiden Führungselemente, sondern auch mit leichter Vorspannung geführt ist.

In diesem Zusammenhang ist anzumerken, dass die Kabelführung in einer beispielhaften Ausgestaltung derart ausgelegt ist, dass zumindest die erste Führungsrolle sensibel auf Bewegungen des Kabels beim Ausziehen und Einschieben reagiert. Mit anderen Worten ist beispielsweise die Speicherfeder hinreichend weich (geringe Steigung in der Kraft-Weg-Kennlinie) gestaltet, so dass bereits ein geringer Zug am Kabel für eine Drehung der ersten Führungsrolle und ein Aufladen des Energiespeichers sorgt. Demgemäß wird beim Einschieben dann nur wenig Energie abgegeben, die unter Umständen nur zu einer geringen Zugkraft am Kabel führt. Es hat sich jedoch gezeigt, dass bereits ein geringes Niveau der Zugkraft ausreicht, um gemeinsam mit dem "Schub" bei der Einschubbewegung das Kabel sicher und ohne Knicke/Schlaufen nach hinten zu führen.

Gemäß einer weiteren beispielhaften Ausgestaltung wirkt das Vorspannelement mittelbar oder unmittelbar auf eine Achse des ersten Führungselements oder des zweiten Führungselements ein, um die Führungselemente gegeneinander vorzuspannen. Beispielsweise sitzt die Achse des ersten Führungselements oder des zweiten Führungselements in einem Langloch und wird dort durch das Vorspannelement in Richtung auf das andere Führungselement vorgespannt.

Gemäß einer weiteren beispielhaften Ausgestaltung ist das Vorspannelement als Druckfeder, Zugfeder oder Blattfeder gestaltet. Auf diese Weise lässt sich die gewünschte Vorspannung erzeugen. Die Vorspannung sorgt auch für eine gewisse Nachgiebigkeit zumindest eines der beiden Führungselemente. Dies erleichtert das Einführen und Herausnehmen von Kabeln.

Gemäß einer weiteren beispielhaften Ausgestaltung ist das Vorspannelement als Bestandteil eines Lagerstücks für das erste oder das zweite Vorspannelement gestaltet. Gemäß dieser Ausführungsform ist das Vorspannelement nicht als separates Element gestaltet, stattdessen wird die Eigenelastizität eines Lagerstücks oder einer Konsole für das entsprechende Vorspannelement genutzt. Beispielhaft kann es sich um ein Stanzbiegeteil aus Blech oder um ein Spritzgussteil handeln, wobei konstruktiv eine gewisse Eigenelastizität vorgesehen ist. Alternativ ist es vorstellbar, ein etwa als Feder gestaltetes Vorspannelement vorzusehen, dass nicht direkt auf das Führungselement, sondern auf dessen Lagerstück oder Konsole einwirkt. Beispielhaft ist eine Feder zwischen einer Konsole für eine Führungsrolle und einem gestellfesten Bauteil angeordnet.

Gemäß einer weiteren beispielhaften Ausgestaltung weist das erste Führungselement eine vertikal orientierte oder horizontal orientierte Achse auf, wobei vorzugsweise das zweite Führungselement eine Achse aufweist, die im Wesentlichen parallel zur ersten Achse orientiert ist. Bei einer parallelen oder nahezu parallelen Orientierung der beiden Achsen kann das Kabel zwischen den Umfangsflächen der beiden Führungselemente geführt werden. Wenn eine oder beide Achsen vertikal orientiert sind, kann sich ein Führungsspalt zwischen den Führungselementen ergeben, in den ein Kabel von oben oder unten eingeschoben werden kann.

Ferner kann die Kabelführung derart angeordnet und ausgerichtet sein, dass das Kabel über zumindest eines der beiden Führungselemente umgelenkt wird. Mit anderen Worten kann das Kabel beispielhaft seitlich abgeführt werden, wenn die Führungsrolle eine vertikal orientierte Achse aufweist. Ferner kann das Kabel nach unten oder oben abgeführt werden, wenn die Führungsrolle eine horizontal orientierte Achse aufweist. Andere Varianten sind denkbar.

Es ist grundsätzlich auch vorstellbar, die Kabelführung insgesamt schwenkbar zu gestalten, beispielsweise ähnlich einer Bockrolle. Die Schwenkachse ist beispielsweise parallel zur Auszugrichtung. Die Schwenkachse kann durch den Führungsspalt verlaufen. Auf diese Weise kann die Kabelführung insgesamt verschwenkt werden und eine für den gewünschten Kabelverlauf günstige Position einnehmen.

Gemäß einer weiteren beispielhaften Ausführungsform ist zumindest das erste Führungselement oder das zweite Führungselement nachgiebig an einem gestellfesten Teil des Möbelstücks angeordnet, so dass ein zu führendes Kabel in einen Führungsspalt zwischen dem ersten Führungselement und dem zweiten Führungselement einführbar ist. Auch dies erleichtert die Handhabung des Kabels, insbesondere dessen Montage oder Demontage. Das Kabel kann sicher geführt und bedarfsweise mit geringer Kraft entnommen werden. Demgemäß sind Ausgestaltungen vorstellbar, bei denen die Kabelführung insgesamt eine gewisse Flexibilität und Nachgiebigkeit aufweist.

Die vorliegende Offenbarung bezieht sich auf ein Möbelstück mit einem Gestell, zumindest einer Schublade und mit einer Kabelführung gemäß zumindest einer der hierin beschriebenen Ausgestaltungen, wobei die Schublade eine Rückwand aufweist, wobei die Rückwand mit einer Aussparung versehen ist, um ein Kabel, insbesondere ein Lade- und/oder Anschlusskabel durchzuführen, und wobei die Kabelführung am Gestell angeordnet und der Aussparung zugeordnet ist.

Bei dem Gestell kann es sich um einen Rahmen, aber auch um Wände und ähnliche im Normalfall unbewegliche Teile des Möbelstücks handeln. Demgemäß ist unter einer Anordnung am Gestell eine gestellfeste Anordnung zu verstehen, die Kabelführung als solches ist dem Gestell gegenüber unbeweglich (im Gegensatz zur ausziehbaren Schublade).

Beispielhaft ist die Kabelführung derart angeordnet, dass ein sich ergebender Führungsspalt in einer Flucht (parallel zur Auszugrichtung) hinter der Aussparung an der Rückwand der Schublade angeordnet ist. Die Aussparung an der Rückwand der Schublade ist als Ausnehmung oder Schlitz gestaltet. Es kann sich um eine geschlossene oder (zum Beispiel nach oben) offene Aussparung handeln, in die das Kabel einführbar ist.

Gemäß einer weiteren beispielhaften Ausführungsform liegt die Rückwand der Schublade im eingeschobenen Zustand einer Gehäusewand des Möbelstücks gegenüber, wobei die Kabelführung an der Gehäusewand angeordnet ist. Beispielsweise weist die Gehäusewand eine Aussparung/Ausnehmung auf, die mit der Aussparung/Ausnehmung der Rückwand der Schublade zumindest teilweise in Überdeckung steht.

Die Kabelführung ist beispielhaft an der von der Schublade abgewandten Seite am Gestell/der Gehäusewand angeordnet. Im geschlossenen Zustand der Schublade sind die Aussparungen/Ausnehmungen der Rückwand der Schublade und der Gehäusewand einander benachbart.

Die Aussparung an der Schublade und/oder die Aussparung am Gestell/an der Rückwand des Möbelstücks können mit einer Tülle oder ähnlichem versehen sein. Auf diese Weise lassen sich Beschädigung des Kabels durch Kontakt mit harten und gegebenenfalls scharfkantigen Bauteilen vermeiden. Ferner kann eine Tülle ein unbeabsichtigtes Herausziehen des Kabels aus der Schublade und/oder dem Möbelstück vermeiden, wenn die Tülle für das Kabel selbst passierbar ist, aber nicht für Stecker mit größerem Querschnitt am Ende des Kabels.

Die Kabelführung eignet sich insbesondere für nach außen geschlossene Schubladen, die im eingeschobenen Zustand in einem Gehäuse/Korpus angeordnet sind. Insbesondere in Großraumbüros oder öffentlichen/halböffentlichen Räumlichkeiten sind derartige Schubladen häufig abschließbar. Daher bietet es sich an, Mobilgeräte und Ähnliches versteckt anzukoppeln, so dass beispielsweise ein Mobiltelefon während des Ladevorgangs eingeschlossen werden kann. Bei einer solchen "geschlossenen" Gestaltung muss jedoch darauf Acht gegeben werden, dass versteckt verlegte Kabel gegen Knickstellen, Schlaufenbildung und Ähnliches geschützt sind. Zu diesem Zweck bietet sich die offenbarungsgemäße Kabelführung an.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine frontale Ansicht einer Ausführungsform eines Möbelstücks in Form eines Schreibtisches;
- Fig. 2: eine perspektivische, teilweise explodierte Ansicht einer Ausführungsform einer Schublade;
- Fig. 3: eine vereinfachte, schematische Draufsicht auf eine Schublade, in teilweise ausgezogenem Zustand;
- Fig. 4: eine weitere Ansicht der Anordnung gemäß Fig. 3 in teilweise eingeschobenem Zustand;
- Fig. 5: eine vereinfachte schematische Darstellung einer Ausführungsform einer Kabelführung für ein Möbelstück,
- Fig. 6: eine schematische Detailansicht der Kabelführung auf Basis der Darstellung gemäß Fig. 5;
- Fig. 7: eine Ansicht von Führungselementen auf Basis der Darstellung gemäß Fig. 6 mit um 90°gedrehter Ansichtsorientierung;
- Fig. 8: eine weitere Ansicht auf Basis der Figuren 6 und 7 zur Veranschaulichung einer Detailgestaltung der Kabelführung;
- Fig. 9: eine schematische Detailansicht einer weiteren Ausführungsform einer Kabelführung; und
- Fig. 10: eine weitere Ansicht auf Basis der Anordnung gemäß Fig. 9, mit um 90°gedrehter Orientierung.

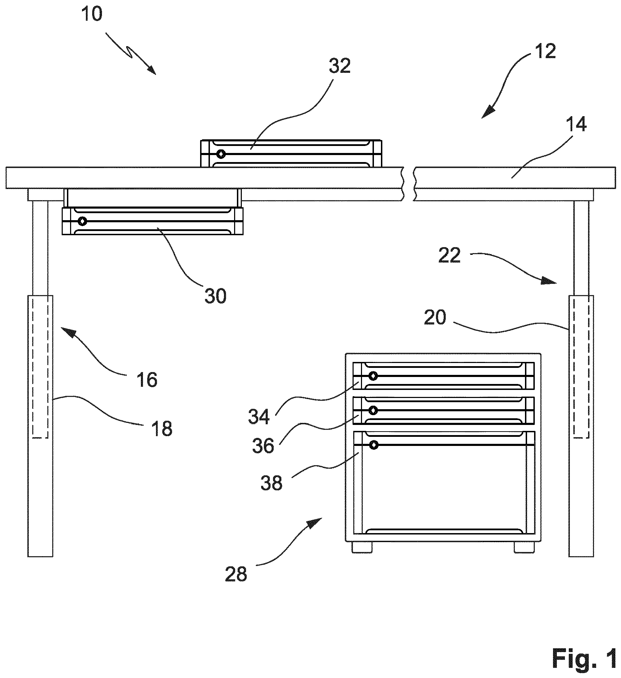

Fig. 1 veranschaulicht in frontaler Ansicht ein insgesamt mit 10 bezeichnetes Möbelstück. Das Möbelstück 10 ist im Ausführungsbeispiel als Tisch 12 gestaltet, insbesondere als Schreibtisch. Der Tisch 12 umfasst eine Tischplatte 14 und ein Gestell 16, das die Tischplatte 14 trägt. Das Gestell umfasst Tischbeine 18, 20, üblicherweise vier Stück, im Ausführungsbeispiel ist der Tisch 12 als höhenverstellbarer Schreibtisch gestaltet und demgemäß mit einem Verstellmechanismus 22 versehen. Im Ausführungsbeispiel sind die Tischbeine 18, 20 teleskopierbar, wodurch sich das Höhenniveau der Tischplatte verändern lässt.

In einer Büroumgebung ist häufig ein sogenannter Rollcontainer oder Container 28 vorgesehen und unterhalb eines Tisches 12 oder seitlich daneben angeordnet. Am Tisch 12 ist eine Schublade 30 angeordnet, die als Unterbau-Schublade gestaltet und unterhalb der Tischplatte 14 angeordnet ist. Es versteht sich, dass auch andere Möbelstücke Schubladen nutzen. Ferner versteht sich, dass Schubladen auch anderweitig am oder beim Tisch 12 angeordnet sein können. Beispielhaft ist eine Schublade 32 auf der Tischplatte 14 platziert. Die Schublade 32 kann als Podest für einen Monitor genutzt werden.

Beispielhaft ist auch der Container 28 mit Auszügen oder Schubladen versehen, vergleiche die Bezugszeichen 34, 36, 38. Es versteht sich, dass auch andere Möbelstücke als Tische oder Rollcontainer Schubladen nutzen können, etwa Schränke, Kommoden und dergleichen.

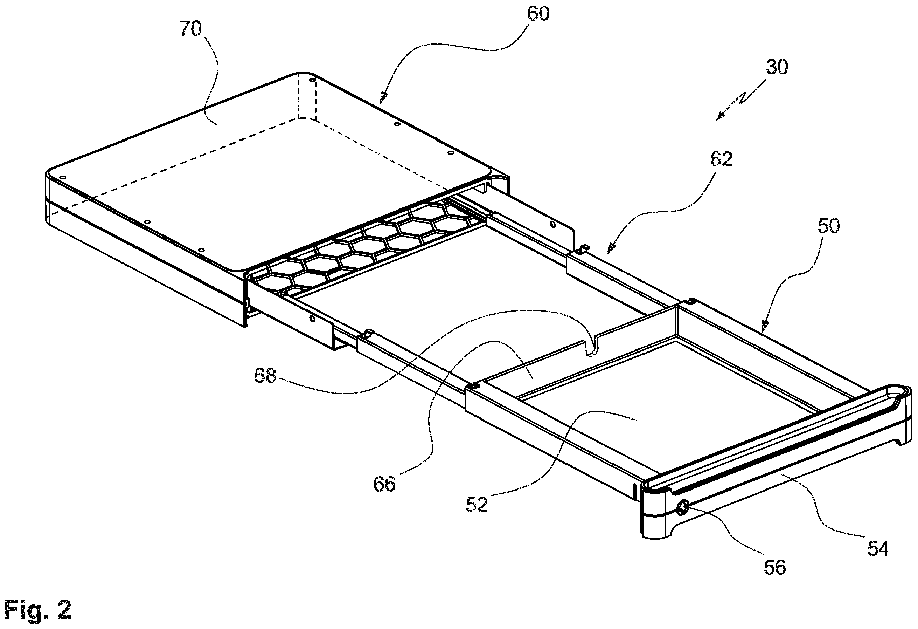

Fig. 2 veranschaulicht eine beispielhafte Gestaltung einer Schublade 30, die als Unterbau-Schublade bei einem Tisch 12 verwendbar ist. Die Schublade 30 umfasst einen Kasten 50, der einen Innenraum 52 aufweist. Der Kasten 50 umfasst eine Frontblende oder Vorderwand 54, die im Ausführungsbeispiel ein Schloss 56 trägt. Mit anderen Worten kann der Kasten 50 im Ausführungsbeispiel in ein als Korpus gestaltetes Gehäuse 60 eingeschoben und dort in der geschlossenen Stellung verriegelt werden. Auf diese Weise eignet sich die Schublade 30 zur sicheren und versteckten Aufbewahrung von Wertobjekten, beispielsweise von Mobiltelefonen oder dergleichen.

Die Schublade 30 ist über einen Auszug 62 mit dem Gehäuse 60 verbunden und relativ zum Gehäuse 60 verfahrbar. Der Auszug 62 erlaubt ein Ausfahren und Einschieben des Kastens 50. Auf diese Weise kann die Schublade 30 geöffnet und geschlossen werden. In Fig. 2 ist die Schublade 30 in einem teilweise explodierten Zustand gezeigt, um Elemente des im Ausführungsbeispiel gemäß Fig. 2 teleskopierbar gestalteten Auszugs 62 sichtbar zu machen.

Der Kasten 50 weist an seinem der Vorderwand 54 gegenüberliegenden Ende eine Rückwand 66 auf, in der eine Ausnehmung oder Aussparung 68 angeordnet ist. Die Aussparung 68 kann für die Durchführung eines Kabels, etwa eines Ladekabels und/oder Datenkabels für ein Mobilgerät genutzt werden. Idealerweise kann das Mobilgerät versteckt an das Kabel angeschlossen werden, also im geschlossenen Zustand der Schublade 30. Das Gehäuse 60 weist eine Gehäusewand 70 auf, die im geschlossenen Zustand der Schublade 30 der Rückwand 66 des Kastens 50 benachbart ist. Die Gehäusewand 70 ist regelmäßig ein gestellfestes Teil des Möbelstücks 14.

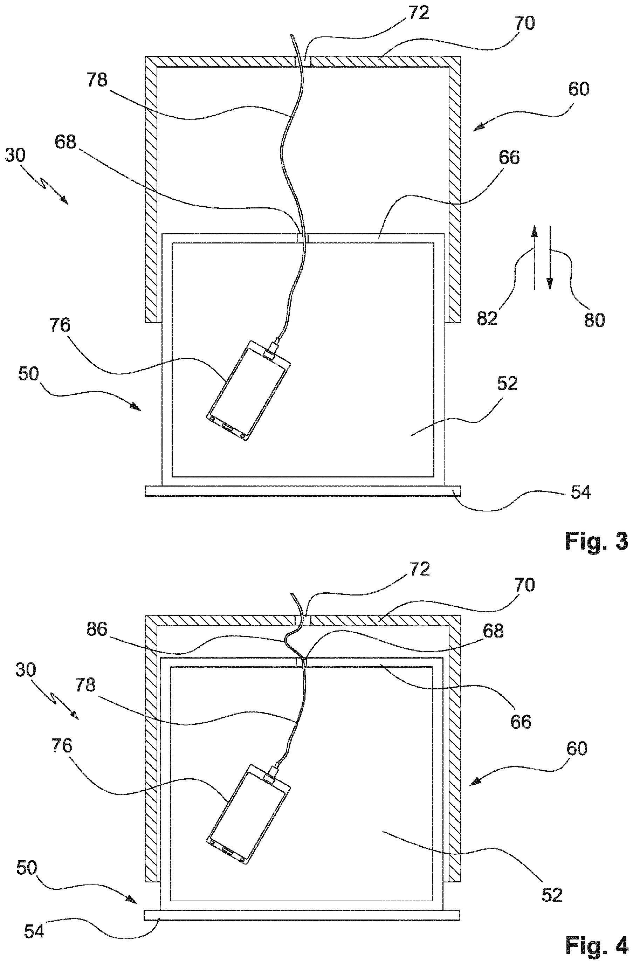

In diesem Zusammenhang veranschaulicht Fig. 3 einen (teilweise) ausgezogenen oder geöffneten Zustand einer Schublade 30, in deren Innenraum 52 ein mit einem Kabel 78 gekoppeltes Mobilgerät 76 angeordnet ist. Fig. 4 veranschaulicht einen (teilweise) eingeschobenen oder geschlossenen Zustand der Schublade 30. In Fig. 3 veranschaulicht ein mit 80 bezeichneter Pfeil die Auszugbewegung. Ein mit 82 bezeichneter Pfeil veranschaulicht die Einschubbewegung.

Im Ausführungsbeispiel erstreckt sich das Kabel 78 durch die Aussparung 68 in der Rückwand 66 der Schublade 30 und durch eine weitere Aussparung 72 in der Gehäusewand 70 hindurch. Wenn die Schublade 30 geöffnet wird (Pfeil 80 in Fig. 3), kann auch das Kabel 78 aus der Gehäusewand 70 herausgezogen werden. Fig. 4 veranschaulicht hingegen einen Zustand, in dem die Schublade 30 nach dem Herausziehen wieder teilweise geschlossen wurde (Pfeil 82 in Fig. 3). Diese Einschubbewegung überträgt sich auf das Kabel 78 und kann dazu führen, dass das Kabel 78 zwischen der Aussparung 68 in der Rückwand 66 und der weiteren Aussparung 72 eine Schlaufe 86 bildet.

Würde man nun die Schublade 30 in Fig. 4 vollständig schließen, so könnte das Kabel 78 im Bereich der Schlaufe 86 eingeklemmt werden. Es können sich Knickstellen o. ä. Beschädigungen beim Kabel 78 ergeben. Dies kann die Funktion des Kabels 78 beeinträchtigen. Beschädigungen am Kabel 78 sind bei der versteckten Anordnung im Innenraum 52 der Schublade 30 nach Möglichkeit zu vermeiden.

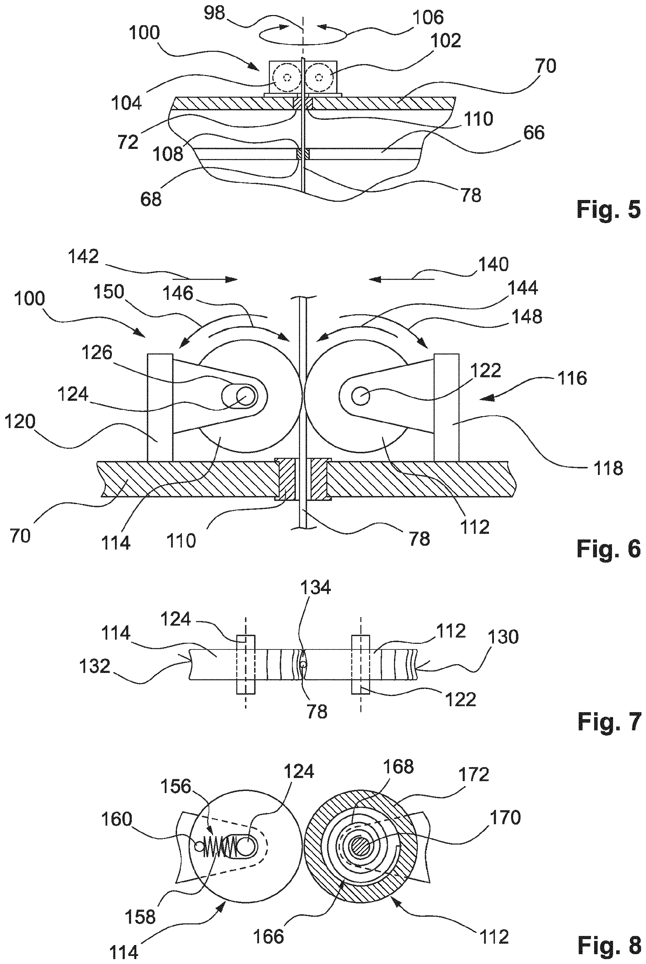

Mit Bezugnahme auf die Figuren 5-8 werden konstruktive und funktionale Merkmale einer beispielhaften Ausgestaltung einer mit 100 bezeichneten Kabelführung veranschaulicht und näher erläutert. Im Ausführungsbeispiel ist die Kabelführung 100 der Gehäusewand 70 zugeordnet und dort benachbart zur Aussparung 72 angeordnet. Allgemein ist die Kabelführung 100 an einem gestellfesten Teil des Möbelstücks 10 angeordnet, wobei sich eine Schublade 30 beim Öffnen und Schließen relativ zu diesem gestellfesten Teil bewegt.

Die Kabelführung 100 umfasst ein erstes Führungselement 102 und ein zweites Führungselement 104, wobei das Kabel 78 zwischen dem ersten Führungselement 102 und dem zweiten Führungselement 104 geführt wird.

In Fig. 5 ist ferner angedeutet, dass die Kabelführung 100 insgesamt um eine mit 98 bezeichnete Achse verschwenkbar ist, vergleiche einen gekrümmten Doppelpfeil 106. Die Schwenkachse 98 ist im Wesentlichen parallel zur Auszugrichtung/Einschubrichtung Auf diese Weise kann die Kabelführung 100 beispielsweise eine horizontale, vertikale oder andere Orientierung aufweisen. Dies kann genutzt werden, um das zu führende Kabel 78 über zumindest eines der Führungselemente 102, 104 gezielt abzuführen/umzulenken. Dies bietet sich insbesondere dann an, wenn zumindest eines der Führungselemente 102, 104 als Führungsrolle gestaltet ist. Dann kann das Kabel 78 beispielsweise um 90° seitlich, nach oben oder nach unten umgelenkt werden. Andere Gestaltungen und auch starre Anordnungen der Kabelführung 100 ohne eine solche Schwenkachse 98 sind denkbar.

Im Ausführungsbeispiel gemäß Fig. 5 ist in der Aussparung 68 der Rückwand 66 der Schublade 30 eine Tülle 108 angeordnet. Gleichermaßen ist in der Aussparung 72 der gestellfesten Gehäusewand 70 eine weitere Tülle 110 angeordnet. Zumindest eine der Aussparungen 68, 72 ist mit einer Tülle 108, 110 versehen. Auf diese Weise können scharfe Kanten im Bereich der Aussparungen 68, 72 abgedeckt werden. Ferner kann die zumindest eine Tülle 108, 110 eine günstige Positionierung des Kabels 78 in Bezug auf die Kabelführung 100 und deren Führungselemente 102, 104 bewirken, vergleiche auch Fig. 6. Es versteht sich, dass die Tüllen 108, 110 nicht unbedingt als geschlossene Tüllen gestaltet sein müssen. Stattdessen können die Tüllen 108, 110 beispielhaft einen etwa U-förmigen Querschnitt aufweisen, der nach oben geöffnet ist und in die das Kabel 78 eingeführt werden kann. Die Tülle 108 kann ferner als Auszugssicherung dienen. In einer beispielhaften Ausgestaltung ist die Tülle 108 derart bemessen, dass etwa ein Stecker am Ende des Kabels 68 im Innenraum 52 der Schublade 30 nicht durch die Tülle 108 nach hinten herausgezogen werden kann, wenn die Schublade 30 ausgezogen wird (vergleiche den Pfeil 80 in Fig. 3).

Im Ausführungsbeispiel gemäß den Figuren 5-8 ist das erste Führungselement 102 als erste Führungsrolle 112 gestaltet. Die erste Führungsrolle 112 wirkt mit dem zweiten Führungselement 104 zusammen. Das zweite Führungselement 104 ist beispielhaft als zweite Führungsrolle 114 gestaltet. Es versteht sich, dass das zweite Führungselement 104 auch anderweitig gestaltet sein kann, etwa als festes Führungselement 104, an dem die Führungsrolle 112 mit ihrem Umfang tangential anliegt.

Die Gestaltung mit der ersten Führungsrolle 112 und der zweiten Führungsrolle 114 kann zur Reibungsminimierung bei der Bewegung der einzelnen Führungsrollen 112, 114 beitragen. Die Kabelführung 100 umfasst ein Lagerstück 116, das gestellfest beim Möbelstück 10 angeordnet ist. Das Lagerstück 116 ist beispielhaft als Lagerbock, Rahmen oder Gehäuse gestaltet. Beispielhaft ist die Kabelführung 100 über das Lagerstück 116 an der Gehäusewand 70 gestellfest angeordnet.

Die erste Führungsrolle 112 ist rotierbar an einer Konsole 118 gelagert. Die zweite Führungsrolle 114 ist rotierbar an einer Konsole 120 gelagert. Die erste Führungsrolle 112 weist eine Achse 122 auf, vergleiche auch Fig. 7. Die zweite Führungsrolle 114 weist eine Achse 124 auf, die im Ausführungsbeispiel in einem Langloch 126 sitzt.

Mit Bezugnahme auf Fig. 7 wird eine beispielhafte Ausgestaltung der Führungsrollen 112, 114 näher veranschaulicht. Fig. 7 zeigt eine gegenüber Fig. 6 um 90°gekippte Ansicht. Die Führungsrolle 112 ist mit einer Führungsfläche 130 versehen. Die Führungsrolle 114 ist mit einer Führungsfläche 132 versehen. In einem Kontaktbereich zwischen den beiden Führungsrollen 112, 114 ist ein Führungsspalt 134 ausgebildet, in dem das Kabel 78 geführt werden kann. Beispielhaft ist zumindest eine der beiden Führungsrollen 112, 114 umfänglich mit einer konkaven Führungsfläche 130, 132 versehen.

Im Ausführungsbeispiel gemäß Fig. 6 ist die Achse 124 der zweiten Führungsrolle 114 in einem Langloch 126 verschieblich an der Konsole 120 gelagert. In diesem Zusammenhang veranschaulichen die Pfeile 140, 142 eine Vorspannkraft, die etwa radial auf die Führungsrollen 112, 114 einwirkt. Wenn die beiden Führungsrollen 112, 114 mit einer gewissen Kraft radial gegeneinander vorgespannt werden, ergibt sich eine günstige Reibung für das durch den Führungsspalt 134 geführte Kabel 78.

Bei der Auszugbewegung (vergleiche Pfeil 80 in Fig. 3) sorgt das Kabel 78 für eine Bewegungsmitnahme der ersten Führungsrolle 112 und gegebenenfalls auch der zweiten Führungsrolle 114 in einer ersten Richtung. In Fig. 6 veranschaulicht ein mit 144 bezeichneter gekrümmter Pfeil die erste Richtung für die Führungsrolle 112. Ferner veranschaulicht ein mit 146 bezeichneter gekrümmter Pfeil die erste Richtung für die Führungsrolle 114. Es versteht sich, dass bei der Gestaltung gemäß Fig. 6 die beiden Führungsrollen 112, 114 gegensinnig gedreht werden, wenn die Schublade 30 und folglich das Kabel 78 ausgezogen werden.

Im Rahmen der vorliegenden Offenbarung wird vorgeschlagen, die erste Bewegung 144, 146 des zumindest einen Führungselements 102, 104 beim Ausziehen zur Erzeugung und Speicherung von Energie zu nutzen, die bei der Einschubbewegung wieder abgegeben werden kann. Auf diese Weise kann das Kabel 78 hinreichend straff geführt und bei der Einschubbewegung durch die Kabelführung 100 gezogen werden, zumindest um die Einschubbewegung zu unterstützen.

Beispielhaft umfasst die Energieabgabe eine Rückstellbewegung in einer zweiten Richtung, die entgegengesetzt zur ersten Richtung 144, 146 ist. In Fig. 6 veranschaulicht ein mit 148 bezeichneter Pfeil die zweite Richtung der Führungsrolle 112. Ein mit 150 bezeichneter Pfeil veranschaulicht die zweite Richtung der Führungsrolle 114. Mit anderen Worten wird ein Rückstellmoment bereitgestellt, dass die zumindest eine Führungsrolle 112, 114 gegensinnig zur Bewegung in der ersten Richtung 144, 146 rotiert.

Es versteht sich, dass das Kabel 78 idealerweise etwas "Übermaß" gegenüber dem Führungsspalt 134 aufweist, so dass sich bei der Bewegung der Führungsrollen 112, 114 in der ersten Richtung 144, 146 oder der zweiten Richtung 148, 150 jeweils eine gewisse Reibung ergibt. Die Reibung sorgt für eine Bewegungsmitnahme der Führungsrollen 112, 114 durch das Kabel 78 bei der Auszugbewegung (Pfeil 80 in Fig. 3). Umgekehrt sorgt die Reibung bei der Einschubbewegung (Pfeil 82 in Fig. 3) für eine Bewegungsmitnahme des Kabels 78 durch die Führungsrollen 112, 114.

Fig. 8 veranschaulicht anhand vereinfachter schematischer Darstellungen ein Vorspannelement 156 zur Erzeugung der Vorspannung zwischen dem ersten Führungselement 102 und dem zweiten Führungselement 104. Im Ausführungsbeispiel umfasst das Vorspannelement 156 eine Feder 158, beispielsweise eine Druckfeder. Andere Gestaltungen des Vorspannelements 156 sind denkbar, etwa als Zugfeder, Biegefeder oder in ähnlicher Weise. Die Feder 158 sitzt zwischen der Achse 124 und einem gegenüberliegenden Anschlag 160. Folglich drückt die Feder 158 im Ausführungsbeispiel die zweite Führungsrolle 114 gegen die erste Führungsrolle 112, so dass im Führungsspalt 134 eine Engstelle für das Kabel 78 entsteht. Es versteht sich, dass das Vorspannelement 156 auch der ersten Führungsrolle 112 zugeordnet sein kann.

Ferner zeigen Fig. 8 einen mit 166 bezeichneten Energiespeicher, der im Ausführungsbeispiel eine Speicherfeder 168 umfasst. Beispielhaft ist die Speicherfeder 168 als Spiralfeder ausgestaltet und der ersten Führungsrolle 112 zugeordnet. Die Speicherfeder 168 weist ein erstes und ein zweites Ende auf, wobei das erste Ende gestellfest an einem Auflager 170 angeordnet ist. Hingegen ist das zweite Ende der Speicherfeder 168 an einem beweglichen Element angeordnet, im Ausführungsbeispiel handelt es sich um eine Drehscheibe 172. Beispielhaft wird die Drehscheibe 172 durch einen drehbaren Bestandteil der ersten Führungsrolle 112 gebildet. Hingegen ist das Auflager 170 fest mit der Konsole 118 bzw. dem Lagerstück 116 verbunden, vergleiche auch Fig. 6. Es versteht sich, dass der Energiespeicher 166 auch der zweiten Führungsrolle 114 zugeordnet sein kann.

Im Ausführungsbeispiel gemäß Fig. 8 ist jeweils nur eines der beiden Führungselemente 102, 104 mit einem Vorspannelement 156 bzw. einem Energiespeicher 166 versehen. Dies ist jedoch nicht einschränkend zu verstehen. Es versteht sich, dass die Kabelführung 100 bedarfsweise auch zwei Vorspannelemente 156 und bedarfsweise auch zwei Energiespeicher 166 aufweisen kann. Auch die Zuordnung des Vorspannelements 156 und des Energiespeicher 166 zu einem der beiden Führungselemente 102, 104 kann je nach Ausführungsform variieren.

Insgesamt zeigt die Anordnung gemäß den Figuren 5-8, dass die Kabelführung 100 zwei Führungselemente 102, 104 derart mit einem Vorspannelement 156 und einem Energiespeicher 166 kombiniert, dass sich einerseits eine günstige Vorspannung zwischen den beiden Führungselementen 102, 104 ergibt. Die Vorspannung erlaubt eine Bewegungsmitnahme zwischen dem zu führenden Kabel 78 und zumindest einem der beiden Führungselemente 102, 104. Die Bewegungsmitnahme erlaubt wiederum das Aufladen des Energiespeichers 166 während der Auszugbewegung, so dass während der Einschubbewegung Energie abgegeben werden kann, um das Kabel geradlinig einzuziehen. Der Energiespeicher 166 erzeugt ein Rückstellmoment, das das Kabel 78 bei der Einschubbewegung führt und begradigt.

Es versteht sich, dass die Kabelführung nicht dazu ausgelegt sein muss, übermäßig hohe Kräfte und Rückstellmomente zu erzeugen. Stattdessen werden regelmäßig nur geringe Kräfte und Momente erzeugt. Gleichwohl kann bereits ein geringes Rückstellmoment in Kombination mit einer geringen Vorspannung zwischen dem ersten Führungselement 102 und den zweiten Führungselement 104 dazu beitragen, das Kabel 78 sicher und beschädigungsarm zu führen.

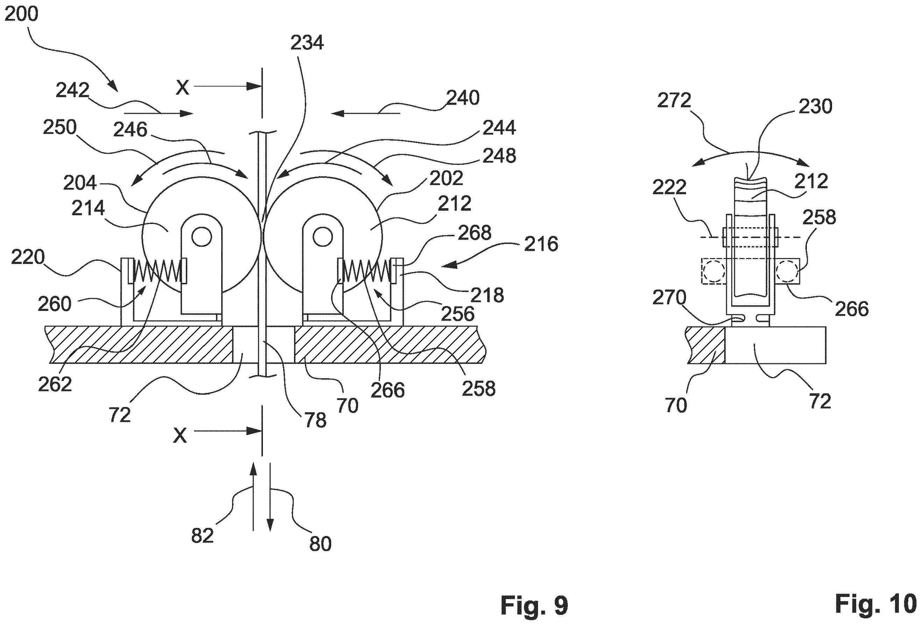

In Ergänzung zu den Figuren 5-8 veranschaulichen die Figuren 9 und 10 eine abgewandelte Ausführungsform einer Kabelführung 200. In Fig. 9 veranschaulicht eine mit X-X bezeichnete Linie die Orientierung der Ansicht in Fig. 10. Nachfolgend wird vorrangig auf Unterscheidungsmerkmale gegenüber der Kabelführung 100 gemäß den Figuren 5-8 eingegangen. Insbesondere hinsichtlich des Energiespeichers 166 ist die Kabelführung 200 ähnlich zur Kabelführung 100 gestaltet.

Die Kabelführung 200 weist ein erstes Führungselement 202 auf, das als erste Führungsrolle 212 gestaltet ist. Ferner ist ein zweites Führungselement 204 vorgesehen, das als zweite Führungsrolle 214 gestaltet ist. Die Kabelführung 200 umfasst ein Lagerstück 216, das im Ausführungsbeispiel Konsolen 218, 220 umfasst. Die Konsolen 218, 220 sind etwa als Blechbiegeteile oder Spritzgussteile gestaltet.

Wie vorstehend bereits dargelegt, kann ein Kabel 78, das eine Aussparung 72 einer Rückwand/Gehäusewand 70 durchragt, zwischen den beiden Führungselementen 202, 204 in einem Führungsspalt 234 aufgenommen und geführt werden. Die beiden Führungselemente 202, 204 sind zumindest leicht radial gegeneinander vorgespannt, vergleiche die Pfeile 240, 242. Bei einer Auszugbewegung (Pfeil 80) "zieht" das Kabel aufgrund der Vorspannung 240, 242 reibungsbedingt an zumindest einem der Führungselemente 202, 204 und dreht dieses in einer ersten Richtung 244, 246. Auf diese Weise kann ein Energiespeicher (in Fig. 9 nicht explizit dargestellt) aufgeladen werden. Die Energie kann bei einer Einschubbewegung (Pfeil 82) abgegeben werden, indem zumindest eines der Führungselemente 202, 204 in einer zweiten Richtung 248, 250 rotiert wird, die der ersten Richtung 244, 246 entgegengesetzt ist. Auf diese Weise kann das Kabel 78 gestrafft werden.

Fig. 9 zeigt eine beispielhafte Ausgestaltung, bei der jedem Führungselement 202, 204 ein Vorspannelement 256, 260 zugeordnet ist. Jedes der Vorspannelemente 256, 260 umfasst eine Feder 258, 262 zur Erzeugung einer radialen Vorspannung zwischen den beiden Führungselementen 202, 204. Beispielhaft ist die Feder 258 zwischen zwei Laschen 266, 268 der Konsole 218 angeordnet. Die Laschen 266, 268 und gegebenenfalls auch die gesamte Konsole 218 können/kann als Blechbiegeteil ausgestaltet sein. Auch die Gestaltung als im Spritzguss verarbeitetes Kunststoffteil ist denkbar.

Fig. 10 zeigt in Ergänzung zu Fig. 9, dass eine Einschnürung 270 für eine erhöhte Nachgiebigkeit und Flexibilität der Konsole 218 sorgt, vergleiche den gekrümmten Doppelpfeil 272. Mit anderen Worten steht die Achse 222 der Führungsrolle 212 nicht unbedingt ortsfest im Raum. Es sind leichte Neigungsbewegungen der Achse 222 vorstellbar. Auf diese Weise kann das Kabel 78 in den Führungsspalt 234 eingebracht werden und dort durch die Führungsfläche 230 geführt werden.

Fig. 10 zeigt ferner die Lasche 266 zur Abstützung der Feder 258. Anhand einer gestrichelten Darstellung ist angedeutet, dass auch auf der gegenüberliegenden Seite der Führungsrolle 212 eine solche Lasche vorgesehen sein kann. Auf diese Weise kann die Vorspannkraft symmetrisch erzeugt werden und die Einschnürung 270 kann noch deutlicher ausfallen. Diese Gestaltung ist jedoch nicht einschränkend zu verstehen.

## Patentansprüche

1. Möbelstück (10) mit einem Gestell (16) und zumindest einer Schublade (30, 32, 34, 36, 38), wobei die Schublade (30, 32, 34, 36, 38) eine Rückwand (66) aufweist, und wobei die Rückwand (66) mit einer Aussparung (68) versehen ist, um ein Kabel (78), insbesondere ein Lade- und/oder Anschlusskabel (78) durchzuführen, **gekennzeichnet durch** eine Kabelführung (100, 200) die am Gestell (16) angeordnet und der Aussparung (68) zugeordnet ist, wobei die Kabelführung Folgendes aufweist:
- ein als Führungsrolle (112, 212) gestaltetes erstes Führungselement (102, 202) mit einer Führungsfläche (130, 230) für ein zu führendes Kabel (78), das mit einem zweiten Führungselement (104, 204) zusammenwirkt,
wobei das erste Führungselement (102, 202) und das zweite Führungselement (104, 204) gegeneinander vorgespannt sind, um dazwischen das Kabel (78) unter Vorspannung zu führen, und
- einen Energiespeicher (166), der ein Rückstellmoment erzeugt, wenn die Führungsrolle (112, 212) durch das zu führende Kabel (78) bei einer Auszugbewegung (80) in einer ersten Drehrichtung (144) rotiert wird,
wobei das Rückstellmoment gegensinnig zur ersten Drehrichtung (144) orientiert ist, um eine Rotation der Führungsrolle (112, 212) in einer zweiten Drehrichtung (148) zu unterstützen, wenn das zu führende Kabel (78) bei einer Einschubbewegung (82) relativ zur Führungsrolle (112, 212) bewegt wird.

2. Möbelstück (10) mit Kabelführung (100, 200) nach Anspruch 1, wobei das zweite Führungselement (104, 204) als zweite Führungsrolle (114, 214) gestaltet ist und eine Führungsfläche (132) für das zu führende Kabel (78) aufweist, und wobei die Führungsrollen (112, 212; 114, 214) mit ihren Umfangsseiten einander zugewandt sind, um das Kabel (78) dazwischen zu führen.

3. Möbelstück (10) mit Kabelführung (100, 200) nach Anspruch 1 oder 2, wobei das zweite Führungselement (104, 204) drehbar am Möbelstück (10) gelagert ist.

4. Möbelstück (10) mit Kabelführung (100, 200) nach einem der Ansprüche 1-3, wobei die zumindest eine Schublade (30, 32, 34, 36, 38) bei der Auszugbewegung (80) und Einschubbewegung (82) relativ zum ersten Führungselement (102, 202) bewegt wird, insbesondere durch eine translatorische Bewegung.

5. Möbelstück (10) mit Kabelführung (100, 200) nach einem der Ansprüche 1-4, wobei der Energiespeicher (166) eine Speicherfeder (168) umfasst und bei der Auszugbewegung (80) vorgespannt wird, wenn das Kabel (78) eine Bewegungsmitnahme zumindest des ersten Führungselement (102, 202) veranlasst.

6. Möbelstück (10) mit Kabelführung (100, 200) nach Anspruch 5, wobei die Speicherfeder (168) als Spiralfeder gestaltet ist.

7. Möbelstück (10) mit Kabelführung (100, 200) nach einem der Ansprüche 1-6, wobei das erste Führungselement (102, 202) eine Achse (122) aufweist, und wobei der insbesondere als Speicherfeder (168) gestaltete Energiespeicher (166) konzentrisch zur Achse (122) angeordnet ist.

8. Möbelstück (10) mit Kabelführung (100, 200) nach einem der Ansprüche 1-7, wobei sowohl das erste Führungselement (102, 202) als auch das zweite Führungselement (104, 204) mit einem Energiespeicher (166) gekoppelt sind.

9. Möbelstück (10) mit Kabelführung (100, 200) nach einem der Ansprüche 1-8, wobei zumindest das erste Führungselement (102, 202) oder das zweite Führungselement (104, 204) mit einem Vorspannelement (156, 256, 260), insbesondere einer Feder (158, 258, 262), gekoppelt ist, die das erste Führungselement (102, 202) und das zweite Führungselement (104, 204) mit ihren Führungsflächen (130, 132) gegeneinander vorspannt, um das Kabel (78) unter Erzeugung von Reibung dazwischen zu führen.

10. Möbelstück (10) mit Kabelführung (100, 200) nach Anspruch 9, wobei das Vorspannelement (156, 256, 260) mittelbar oder unmittelbar auf eine Achse (122, 124) des ersten Führungselements (102, 202) oder des zweiten Führungselements (104, 204) einwirkt, um die Führungselemente (102, 202; 104, 204) gegeneinander vorzuspannen.

11. Möbelstück (10) mit Kabelführung (100, 200) nach Anspruch 9 oder 10, wobei das Vorspannelement (156, 256, 260) als Druckfeder, Zugfeder oder Blattfeder gestaltet ist, oder wobei das Vorspannelement (156, 256, 260) als Bestandteil eines Lagerstücks (116, 216) für das erste und/oder das zweite Führungselement (102, 202) gestaltet ist.

12. Möbelstück (10) mit Kabelführung (100, 200) nach einem der Ansprüche 1-11, wobei das erste Führungselement (102, 202) eine vertikal orientierte oder horizontal orientierte Achse (122) aufweist, und wobei vorzugsweise das zweite Führungselement (104, 204) eine Achse (124) aufweist, die im Wesentlichen parallel zur ersten Achse (122) orientiert ist.

13. Möbelstück (10) mit Kabelführung (100, 200) nach einem der Ansprüche 1-12, wobei zumindest das erste Führungselement (102, 202) oder das zweite Führungselement (104, 204) nachgiebig an einem gestellfesten Teil des Möbelstücks (10) angeordnet ist, so dass ein zu führendes Kabel (78) in einen Führungsspalt zwischen dem ersten Führungselement (102, 202) und dem zweiten Führungselement (104, 204) einführbar ist.

14. Möbelstück (10) nach einem der Ansprüche 1-13, wobei die Rückwand (66) der Schublade (30, 32, 34, 36, 38) im eingeschobenen Zustand einer Gehäusewand (70) des Möbelstücks (10) gegenüberliegt, und wobei die Kabelführung (100, 200) an der Gehäusewand (70) angeordnet ist.

## Claims

1. A piece of furniture (10) having a frame (16) and at least one drawer (30, 32, 34, 36, 38), wherein the drawer (30, 32, 34, 36, 38) has a rear wall (66), and wherein the rear wall (66) is provided with a recess (68) for passing through a cable (78), in particular a charging and/or connecting cable (78),
**characterized by** a cable guide (100, 200), which is arranged on the frame (16) and is associated with the recess (68), the cable guide comprising:
- a first guide element (102, 202) that is arranged as a guide roller (112, 212) with a guide surface (130, 230) for a cable (78) to be guided, which cooperates with a second guide element (104, 204),
wherein the first guide element (102, 202) and the second guide element (104, 204) are biased against one another to guide the cable (78) therebetween under pretension, and
- an energy accumulator (166) that generates a restoring torque when the guide roller (112, 212) is rotated in a first rotation direction (144) by the cable (78) to be guided during a pull-out movement (80),
wherein the restoring torque is oriented in the opposite direction to the first rotation direction (144) in order to support a rotation of the guide roller (112, 212) in a second rotation direction (148) when the cable (78) to be guided is moved relative to the guide roller (112, 212) during a slide-in movement (82).

2. The piece of furniture (10) with cable guide (100, 200) according to claim 1, wherein the second guide element (104, 204) is arranged as a second guide roller (114, 214) and has a guide surface (132) for the cable (78) to be guided, and wherein the guide rollers (112, 212; 114, 214) face each other with their circumferential sides in order to guide the cable (78) therebetween.

3. The piece of furniture (10) with cable guide (100, 200) according to claim 1 or 2, wherein the second guide element (104, 204) is rotatably mounted on the piece of furniture (10).

4. The piece of furniture (10) with cable guide (100, 200) according to any one of claims 1-3, wherein the at least one drawer (30, 32, 34, 36, 38) is moved relative to the first guide element (102, 202) during the pull-out movement (80) and insertion movement (82), in particular by a translational movement.

5. The piece of furniture (10) with cable guide (100, 200) according to any one of claims 1-4, wherein the energy accumulator (166) comprises a storage spring (168) and is biased during the pull-out movement (80) when the cable (78) causes motion entrainment of at least the first guide element (102, 202).

6. The piece of furniture (10) with cable guide (100, 200) according to claim 5, wherein the storage spring (168) is arranged as a spiral spring.

7. The piece of furniture (10) with cable guide (100, 200) according to any one of the claims 1-6, wherein the first guide element (102, 202) has an axis (122), and wherein the energy accumulator (166), which is in particular arranged as a storage spring (168), is arranged concentrically to the axis (122).

8. The piece of furniture (10) with cable guide (100, 200) according to any one of claims 1-7, wherein both the first guide element (102, 202) and the second guide element (104, 204) are coupled to an energy accumulator (166).

9. The piece of furniture (10) with cable guide (100, 200) according to any one of claims 1-8, wherein at least the first guide element (102, 202) or the second guide element (104, 204) is coupled to a biasing element (156, 256, 260), in particular a spring (158, 258, 262) that biases the first guide element (102, 202) and the second guide element (104, 204) with their guide surfaces (130, 132) against one another, in order to guide the cable (78) therebetween while generating friction.

10. The piece of furniture (10) with cable guide (100, 200) according to claim 9, wherein the biasing element (156, 256, 260) acts mediately or directly on an axis (122, 124) of the first guide element (102, 202) or of the second guide element (104, 204) in order to bias the guide elements (102, 202; 104, 204) against one another.

11. The piece of furniture (10) with cable guide (100, 200) according to claim 9 or 10, wherein the biasing element (156, 256, 260) is arranged as a compression spring, tension spring or leaf spring, or wherein the biasing element (156, 256, 260) is arranged as a component of a bearing piece (116, 216) for the first and/or the second guide element (102, 202).

12. The piece of furniture (10) with cable guide (100, 200) according to any one of claims 1-11, wherein the first guide element (102, 202) has a vertically oriented or horizontally oriented axis (122), and wherein preferably the second guide element (104, 204) has an axis (124) that is oriented substantially parallel to the first axis (122).

13. The piece of furniture (10) with cable guide (100, 200) according to any one of claims 1-12, wherein at least the first guide element (102, 202) or the second guide element (104, 204) is flexibly arranged on a part of the piece of furniture (10) that is arranged in a manner fixed to a frame, so that a cable (78) to be guided can be inserted into a guide gap between the first guide element (102, 202) and the second guide element (104, 204).

14. The piece of furniture (10) according to any one of claims 1-13, wherein the rear wall (66) of the drawer (30, 32, 34, 36, 38) is opposite a housing wall (70) of the piece of furniture (10) in the inserted state, and wherein the cable guide (100, 200) is arranged on the housing wall (70).

## Revendications

1. Meuble (10) avec un châssis (16) et au moins un tiroir (30, 32, 34, 36, 38), le tiroir (30, 32, 34, 36, 38) présentant une paroi arrière (66), et la paroi arrière (66) étant pourvue d'un évidement (68) pour faire passer un câble (78), notamment un câble de chargement et/ou de raccordement (78), **caractérisé par** un guide-câble (100, 200) qui est agencé sur le châssis (16) et est associé à l'évidement (68), le guide-câble présentant les éléments suivants :
- un premier élément de guidage (102, 202) conçu sous forme de rouleau de guidage (112, 212) avec une surface de guidage (130, 230) pour un câble (78) à guider, qui coopère avec un deuxième élément de guidage (104, 204),
le premier élément de guidage (102, 202) et le deuxième élément de guidage (104, 204) étant précontraints l'un vers l'autre afin de guider le câble (78) entre eux sous précontrainte, et
- un accumulateur d'énergie (166) qui génère un couple de rappel lorsque le rouleau de guidage (112, 212) est mis en rotation dans une première direction de rotation (144) par le câble (78) à guider lors d'un mouvement d'extraction (80),
le couple de rappel étant orienté à l'opposé de la première direction de rotation (144) afin de soutenir une rotation du rouleau de guidage (112, 212) dans une deuxième direction de rotation (148) lorsque le câble (78) à guider est déplacé par rapport au rouleau de guidage (112, 212) lors d'un mouvement d'insertion (82).

2. Meuble (10) avec guide-câble (100, 200) selon la revendication 1, dans lequel le deuxième élément de guidage (104, 204) est conçu sous forme de deuxième rouleau de guidage (114, 214) et présente une surface de guidage (132) pour le câble (78) à guider, et dans lequel les rouleaux de guidage (112, 212 ; 114, 214) sont tournés l'un vers l'autre par leurs côtés périphériques afin de guider le câble (78) entre eux.

3. Meuble (10) avec guide-câble (100, 200) selon la revendication 1 ou 2, dans lequel le deuxième élément de guidage (104, 204) est monté de manière rotative sur le meuble (10).

4. Meuble (10) avec guide-câbles (100, 200) selon l'une quelconque des revendications 1 à 3, dans lequel l'au moins un tiroir (30, 32, 34, 36, 38) est déplacé par rapport au premier élément de guidage (102, 202) lors du mouvement d'extraction (80) et du mouvement d'insertion (82), notamment par un mouvement de translation.

5. Meuble (10) avec guide-câble (100, 200) selon l'une quelconque des revendications 1 à 4, dans lequel l'accumulateur d'énergie (166) comprend un ressort accumulateur (168) et est précontraint lors du mouvement d'extraction (80) lorsque le câble (78) provoque un entraînement en mouvement d'au moins le premier élément de guidage (102, 202).

6. Meuble (10) avec guide-câble (100, 200) selon la revendication 5, dans lequel le ressort accumulateur (168) est conçu sous forme de ressort spiral.

7. Meuble (10) avec guide-câble (100, 200) selon l'une quelconque des revendications 1 à 6, dans lequel le premier élément de guidage (102, 202) présente un axe (122), et dans lequel l'accumulateur d'énergie (166), conçu notamment sous forme de ressort accumulateur (168), est agencé de manière concentrique à l'axe (122).

8. Meuble (10) avec guide-câble (100, 200) selon l'une quelconque des revendications 1 à 7, dans lequel le premier élément de guidage (102, 202) et le deuxième élément de guidage (104, 204) sont tous deux couplés à un accumulateur d'énergie (166).

9. Meuble (10) avec guide-câble (100, 200) selon l'une quelconque des revendications 1 à 8, dans lequel au moins le premier élément de guidage (102, 202) ou le deuxième élément de guidage (104, 204) est couplé à un élément de précontrainte (156, 256, 260), notamment un ressort (158, 258, 262), qui précontraint le premier élément de guidage (102, 202) et le deuxième élément de guidage (104, 204) l'un vers l'autre avec leurs surfaces de guidage (130, 132), afin de guider le câble (78) entre eux en générant un frottement.

10. Meuble (10) avec guide-câble (100, 200) selon la revendication 9, dans lequel l'élément de précontrainte (156, 256, 260) agit directement ou indirectement sur un axe (122, 124) du premier élément de guidage (102, 202) ou du deuxième élément de guidage (104, 204) afin de précontraindre les éléments de guidage (102, 202 ; 104, 204) l'un vers l'autre.

11. Meuble (10) avec guide-câble (100, 200) selon la revendication 9 ou 10, dans lequel l'élément de précontrainte (156, 256, 260) est conçu sous forme de ressort de compression, ressort de traction ou ressort à lame, ou dans lequel l'élément de précontrainte (156, 256, 260) est conçu sous forme de constituant d'une pièce de support (116, 216) pour le premier et/ou le deuxième élément de guidage (102, 202).

12. Meuble (10) avec guide-câble (100, 200) selon l'une quelconque des revendications 1 à 11, dans lequel le premier élément de guidage (102, 202) présente un axe (122) orienté verticalement ou orienté horizontalement, et dans lequel, de préférence, le deuxième élément de guidage (104, 204) présente un axe (124) orienté essentiellement parallèlement au premier axe (122).

13. Meuble (10) avec guide-câble (100, 200) selon l'une quelconque des revendications 1 à 12, dans lequel au moins le premier élément de guidage (102, 202) ou le deuxième élément de guidage (104, 204) est agencé de manière flexible sur une partie du meuble (10) solidaire du bâti, de telle sorte qu'un câble (78) à guider peut être introduit dans une fente de guidage entre le premier élément de guidage (102, 202) et le deuxième élément de guidage (104, 204).

14. Meuble (10) selon l'une quelconque des revendications 1 à 13, dans lequel la paroi arrière (66) du tiroir (30, 32, 34, 36, 38) fait face à une paroi de boîtier (70) du meuble (10) à l'état inséré, et dans lequel le guide-câble (100, 200) est agencé sur la paroi de boîtier (70).
